# EUROPÄISCHE PATENTSCHRIFT

(11) **EP 4 160 427 B1**
(45) Veröffentlichungstag und Bekanntmachung des Hinweises auf die Patenterteilung: **27.11.2024**
(21) Anmeldenummer: 21200430.3
(22) Anmeldetag: 01.10.2021
(51) Int. Cl.: G06F 13/38, G06F 13/40, G06F 13/42, G06F 13/16, H04L 65/60, H04L 12/403, H04L 12/40, H04L 12/46, H04J 3/06, H04L 12/413, H04L 12/28, H04L 69/18, H04L 69/323, H04L 25/14

(54) **ÜBERTRAGUNG VON USB-DATEN IN EINEM DATENSTROM**
TRANSMISSION OF USB DATA IN A DATA STREAM
TRANSMISSION DE DONNÉES USB DANS UN FLUX DE DONNÉES

(43) Veröffentlichungstag der Anmeldung: 05.04.2023
(73) Patentinhaber: Siemens Healthineers AG, 91301 Forchheim (DE)
(72) Erfinder: Karl, Harald, 90765 Fürth (DE)
(74) Vertreter: Siemens Healthineers Patent Attorneys

(56) Entgegenhaltungen:
- EP-A2- 2 075 982
- US-A1- 2005 273 312
- US-A1- 2013 336 334

## Beschreibung

Die Erfindung betrifft ein Verfahren zur Versendung von USB-Daten in einem Datenstrom, ein Verfahren zum Empfang solcher Daten sowie eine Sendeeinheit, eine Empfangseinheit und ein Übertragungssystem.

USB Netzwerke haben die Eigenschaft, dass sich nur begrenzte Distanzen (5m) zwischen dem PC bzw. Host und dem Endgerät überbrücken lassen. Der Hauptgrund für diese Begrenzung ist die maximal zulässige Umlaufverzögerung bzw. Antwortzeit von 1,5 ps. Wenn USB-Host-Befehle vom USB-Gerät innerhalb der zulässigen Zeit nicht beantwortet werden, betrachtet der Host den Befehl als verloren. Um die USB-Spezifikation zu erfüllen, sollte die Kabellänge nicht länger als 5 oder 3 Meter sein. Durch die Verwendung von jeweils zwischengeschalteten USB-Hubs lassen sich bis zu sechs dieser Kabel hintereinanderschalten. Insgesamt können somit höchstens ca. 30 Meter Übertragungsweg erreicht werden.

Ein beispielhafter Anwendungsfall ergibt sich aus der Medizintechnik: Im Untersuchungsraum befindet sich häufig der Monitor sowie die Maus und die Tastatur, welche über USB an den PC angebunden werden müssen. Der PC befindet sich jedoch zwischen 10 - 30m entfernt in einem anderen Raum, z. B. in einem Bedienraum oder einem zentralen Rechen- bzw. Serverraum. D. h. zwischen dem PC und dem Anzeigegerät ist häufig eine kabelgebundene Videoverbindung vorhanden und zusätzlich wird eine USB-Verbindung benötigt, sodass üblicherweise zwei Kabel verlegt sind.

Für das Überbrücken von größeren als vom Standard vorgesehen Distanzen sind aus der Praxis optische Extender bekannt. Diese wandeln das elektrische USB-Signal eines Endgeräts direkt in ein Lichtsignal um, übertragen es und wandeln es am Empfänger wieder zurück. Dabei braucht man für jede USB-Schnittstelle ein eigenes Lichtwellenleiterkabel.

Zudem sind aus der Praxis sogenannte KVM-Extender bekannt. Diese übertragen die USB-Signale jedoch nicht transparent, sondern setzen üblicherweise Kenntnis über das angeschlossene Endgerät voraus.

Es ist eine Aufgabe der vorliegenden Erfindung, sowohl beliebige USB-Daten als auch weitere beliebige Streaming-Daten über ein Kabel zu übertragen.

Diese Aufgabe wird durch ein Verfahren zur Versendung gemäß Patentanspruch 1 und ein Verfahren zum Empfang gemäß Patentanspruch 10 sowie durch eine Sendeeinheit gemäß Patentanspruch 12, eine Empfangseinheit gemäß Patentanspruch 13 sowie durch ein Übertragungssystem gemäß Patentanspruch 14 gelöst.

Das eingangs genannte Verfahren dient zur Versendung von USB-Daten in einem Datenstrom. Der Datenstrom umfasst dabei beliebige Streaming-Daten. Das Verfahren weist folgende Schritte auf. In einem Schritt werden die Streaming-Daten umfassend Video- und/oder Audiodaten und zumindest ein Teil der USB-Daten empfangen. Die USB-Daten umfassen eine Anzahl von USB-Paketen mit einer ersten Anzahl von Bits. In einem weiteren Schritt werden die USB-Daten aufgeteilt, um eine Anzahl von Sendungspaketen mit einer zweiten Anzahl von Bits an USB-Daten zu erzeugen. Ein solches Sendungspaket wird in einem folgenden Schritt in den Datenstrom eingefügt. Der zusammengesetzte Datenstrom wird in einem weiteren Schritt versendet. Dabei wird zumindest an ein initiales Sendungspaket ein Unterbrechungsmuster angefügt, um einem Empfänger zu signalisieren, dass USB-Daten im Datenstrom vorhanden sind, wobei das Unterbrechungsmuster das wenigstens eine initiale Sendungspaket identifiziert und einem Empfänger signalisiert, dass es sich um ein Sendungspaket handelt.

Der Begriff Datenstrom bezeichnet allgemein einen kontinuierlichen Fluss von Datensätzen, dessen Ende meist nicht im Voraus abzusehen ist. Der Datenstrom ist insbesondere seriell, d. h. die Datensätze werden fortlaufend verarbeitet, versendet und/oder empfangen. Die Streaming-Daten können als fortlaufende bzw. serielle Daten grundsätzlich in beliebigem Format bzw. Protokoll (z. B. HSSL) empfangen werden. Die Streaming-Daten umfassen dabei Inhalte wie z. B. Audiodaten, Videodaten, Messdaten oder auch Ethernet-Daten oder dergleichen, jedoch keine USB-Daten. Sie weisen dabei eine hohe Datenrate bzw. Bandbreite von mehreren GB/s wie z. B. bei 4K-Videodaten auf.

Die zu empfangenen USB-Daten können grundsätzlich von beliebigen USB-Geräten, wie z. B. Maus, Tastatur, Massenspeichermedien oder dergleichen, stammen oder beispielsweise auch bereits mittels eines USB-Hubs zusammengefasst worden sein. Entsprechend der USB-Spezifikationen können den USB-Daten unterschiedliche Übertragungsgeschwindigkeiten (Low Speed, Full Speed, High Speed) zugrunde liegen, für die wiederum unterschiedliche maximale Größen der USB-Pakete im Standard definiert sind. Die maximale Größe eines USB-Pakets entspricht einer maximalen Anzahl von Bits, z. B. 8 Bytes bei Low Speed bis zu 1024 Bytes bei High Speed, die das jeweilige USB-Paket beinhaltet.

Dass die USB-Daten bzw. die einzelnen USB-Pakete aufgeteilt werden, bedeutet, dass insbesondere ein größeres USB-Paket auf mehrere Sendungspakete aufgeteilt wird. Die USB-Daten sind somit Sendungsnutzdaten des Sendungspakets. Mit der Aufteilung der USB-Daten auf Sendungspakete wird bevorzugt bereits begonnen, sobald ein Teil eines USB-Pakets empfangen wurde, der der zweiten Anzahl an Bits entspricht. Insbesondere ist die zweite Anzahl von Bits kleiner als die erste Anzahl von Bits. Auch wenn an diesem Zusammenhang der Begriff "Bits" verwendet wird, ist klar, dass die Einheitsgröße bei der Datenübertragung typischerweise in Bytes angegeben wird.

Die Sendungspakete (auch als Droplets bezeichnet) werden in den Datenstrom, also insbesondere in die fortlaufenden Streaming-Daten, eingefügt. Sie stellen somit Fremddaten dar, die grundsätzlich an einer beliebigen Position zwischen den Streaming-Daten angeordnet sein können. Um die Sendungspakete von den übrigen Streaming-Daten im Datenstrom unterscheiden zu können, ist zumindest einem initialen Sendungspaket ein Unterbrechungsmuster angefügt.

Bei dem Unterbrechungsmuster handelt es sich um eine möglichst charakteristische Bit-Folge. Es kann beispielsweise statisch vordefiniert sein oder z. B. aus einer Anzahl von vordefinierten Unterbrechungsmustern ausgewählt werden, wie später noch näher erläutert wird.

Auch wenn das Unterbrechungsmuster dem Sendungspaket grundsätzlich nachfolgen könnte, ist es für die weitere Datenverarbeitung vorteilhaft, wenn das Unterbrechungsmuster dem Sendungspaket vorausgeht. Das Unterbrechungsmuster identifiziert somit das zugehörige Sendungspaket und signalisiert einem Empfänger, dass es sich um ein Sendungspaket handelt. Die Kombination von Unterbrechungsmuster und Sendungspaket wird auch als Drop bezeichnet.

Da es sich bei den USB-Daten um zeitkritische Daten handelt, ist es vorteilhaft, wenn die USB-Daten in den Sendungspaketen möglichst schnell weiterversendet werden. Die Übertragung der USB-Daten mittels der Sendungspakete erfolgt transparent und insbesondere Bit-transparent, d. h. dass die USB-Daten nach dem Versenden beim Empfangen wieder identisch rekonstruiert werden, ohne dass über eine Quelle der USB-Daten Informationen vorliegen müssen. Daher können die USB-Daten bereits auf Sendungspakete aufgeteilt werden, sogar bevor ein USB-Paket als Ganzes empfangen wurde. Infolge ist es möglich, dass das Sendungspaket in einem möglichst kurzen Zeitabschnitt, nachdem es erzeugt wurde, also z. B. in einer direkt folgenden Clock bzw. Takt des Datenstroms, versendet wird. Diese Zeiteinsparungen sind besonders vorteilhaft, da jegliche Zeiteinsparung bei der Datenverarbeitung eine mögliche Verlängerung der Übertragungsstrecke für die USB-Daten bewirkt.

Das Mittel zur Übertragung des Datenstroms ist dabei so ausgelegt, dass es neben der für die Streaming-Daten benötigten Bandbreite zusätzlich auch die USB-Daten in Form der Sendungspakete übertragen kann.

Die eingangs genannte Sendeeinheit zur Versendung von USB-Daten in einem Datenstrom, der Streaming-Daten umfassend Video- und/oder Audiodaten umfasst, weist folgende Komponenten auf. Sie umfasst zumindest eine Streaming-Eingangsschnittstelle zum Empfangen der Streaming-Daten sowie eine USB-Eingangsschnittstelle zum Empfangen der USB-Daten, die eine Anzahl von USB-Paketen mit einer ersten Anzahl von Bits umfasst. Sie umfasst zudem eine Verteilungseinheit zum Aufteilen der USB-Daten, um eine Anzahl von Sendungspaketen mit einer zweiten Anzahl von Bits an USB-Daten zu erzeugen. Die Sendeeinheit umfasst ferner eine Kombinationseinheit zum Einfügen eines Sendungspakets in den Datenstrom. Des Weiteren weist sie eine Ausgangsschnittstelle zum Versenden des zusammengesetzten Datenstroms auf. Dabei wird zumindest an ein initiales Sendungspaket ein Unterbrechungsmuster angefügt, um zu signalisieren, dass USB-Daten im Datenstrom vorhanden sind, wobei das Unterbrechungsmuster das wenigstens eine initiale Sendungspaket identifiziert und einem Empfänger signalisiert, dass es sich um ein Sendungspaket handelt.

Die Sendeeinheit weist somit alle Komponenten auf, um ein erfindungsgemäßes Verfahren zur Versendung von Daten auszuführen.

Bei dem eingangs genannten Verfahren zum Empfang von Daten wird in einem ersten Schritt ein zusammengesetzter Datenstrom empfangen, der nach einem erfindungsgemäßen Verfahren versandt wurde. In dem Datenstrom wird in einem weiteren Schritt ein Unterbrechungsmuster identifiziert. Unter Verwendung des Unterbrechungsmusters, das wenigstens ein initiales Sendungspaket identifiziert und einem Empfänger signalisiert, dass es sich um ein Sendungspaket handelt, wird der Datenstrom in Sendungspakete und Streaming-Daten, umfassend Video- und/oder Audiodaten, aufgeteilt. In einem weiteren Schritt werden die in den Sendungspaketen enthaltenen USB-Daten zu USB-Datenpaketen rekonstruiert, die insbesondere mit den ursprünglichen USB-Datenpaketen identisch sind. In einem weiteren Schritt werden die Streaming-Daten und die rekonstruierten USB-Daten separat ausgegeben.

Die eingangs genannte Empfangseinheit dient zum Empfang von USB-Daten in einem Datenstrom, der Streaming-Daten umfassend Video- und/oder Audiodaten umfasst.

Sie weist eine Eingangsschnittstelle zum Empfangen eines zusammengesetzten Datenstroms auf, der Sendungspakete und Streaming-Daten umfasst. Dabei ist zumindest an ein initiales Sendungspaket ein Unterbrechungsmuster angefügt, um zu signalisieren, dass USB-Daten im Datenstrom vorhanden sind, wobei das Unterbrechungsmuster das wenigstens eine initiale Sendungspaket identifiziert und einem Empfänger signalisiert, dass es sich um ein Sendungspaket handelt. Die Eingangsschnittstelle dient also zum Empfang eines erfindungsgemäß versandten Datenstroms. Die Empfangseinheit weist zudem eine Identifikationseinheit zum Identifizieren eines Unterbrechungsmusters auf. Ferner umfasst sie eine Teilungseinheit zum Aufteilen des Datenstroms in Sendungspaket und Streaming-Daten unter Verwendung des Unterbrechungsmusters. Mittels einer zudem umfassten Rekonstruktionseinheit werden die in den Sendungspaketen enthaltenen USB-Daten zu USB-Datenpaketen rekonstruiert. Außerdem umfasst die Empfangseinheit zumindest eine Streaming-Ausgabeschnittstelle zur Ausgabe der Streaming-Daten sowie eine USB-Ausgabeschnittstelle zur Ausgabe der USB-Daten.

Die Empfangseinheit weist somit alle Komponenten auf, um ein erfindungsgemäßes Verfahren zum Empfang von Daten auszuführen.

Das eingangs genannte Verfahren zur Übertragung von Daten umfasst die Schritte zur Versendung von Daten mittels eines erfindungsgemäßen Verfahrens zur Versendung von USB-Daten sowie die Schritte eines erfindungsgemäßen Verfahrens zum Empfangen von Daten.

Das eingangs genannte Übertragungssystem zur Übertragung von USB-Daten in zumindest einem Datenstrom, der Streaming-Daten umfasst, weist folgende Komponenten auf. Es umfasst eine Client-Vorrichtung mit einer erfindungsgemäßen Sendeeinheit und einer erfindungsgemäßen Empfangseinheit. Zudem umfasst es eine Host-Vorrichtung mit einer erfindungsgemäßen Sendeeinheit und einer erfindungsgemäßen Empfangseinheit. Dabei ist die Sendeeinheit der Client-Vorrichtung mit der Empfangseinheit der Host-Vorrichtung und die Sendeeinheit der Host-Vorrichtung mit der Empfangseinheit der Client-Vorrichtung verbunden.

Die Client-Vorrichtung steht mit der Host-Vorrichtung also in typischer Client-Host-Beziehung, in der der Host Dienste, z. B. Rechenleistung, für den Client bereitstellt, die vom Client angefordert werden können. Jeder Übertragungsweg, also einerseits von der Client-Vorrichtung zur Host-Vorrichtung und andererseits von der Host-Vorrichtung zur Client-Vorrichtung, ist bevorzugt unidirektional und nicht mit dem anderen Übertragungsweg verbunden. Das Übertragungssystem ermöglicht mittels der beiden Übertragungswege eine bidirektionale Übertragung von USB-Daten und Streaming-Daten. Jeder Übertragungsweg ist dabei so ausgebildet, dass er die Komponenten umfasst, die notwendig sind, um ein erfindungsgemäßes Verfahren zur Übertragung von Daten auszuführen.

Ein Großteil der zuvor genannten Komponenten der Sendeeinheit, der Empfangseinheit und/oder des Übertragungssystems können ganz oder teilweise in Form von logischen Schaltkreisen bzw. Logikanordnungen realisiert werden.

Grundsätzlich können diese Komponenten aber auch zum Teil, insbesondere wenn es um besonders schnelle Berechnungen geht, in Form von softwareunterstützter Hardware, beispielsweise FPGAs, ASICs oder dergleichen, realisiert sein. Ebenso können die benötigten Schnittstellen, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine weitgehend softwaremäßige Realisierung hat den Vorteil, dass auch schon bisher verwendete Sendeeinheiten, Empfangseinheiten und/oder Übertragungssysteme auf einfache Weise durch ein Software-Update bzw. Umkonfigurierung des FPGAs nachgerüstet werden können, um auf die erfindungsgemäße Weise zu arbeiten. Insofern wird die Aufgabe auch durch ein entsprechendes Computerprogrammprodukt gelöst, welches in eine programmierbare Logikanordnung einer Sendeeinheit, einer Empfangseinheit und/oder eines Übertragungssystems verschaltbar ist, mit Programmabschnitten bzw. logischen Anweisen, um Schritte des erfindungsgemäßen Verfahrens auszuführen, wenn die Logik in der Sendeeinheit, der Empfangseinheit und/oder dem Übertragungssystem ausgeführt wird. Ein solches Computerprogrammprodukt kann neben dem Computerprogramm gegebenenfalls zusätzliche Bestandteile wie z. B. eine Dokumentation und / oder zusätzliche Komponenten, auch Hardware-Komponenten, wie z. B. Hardware-Schlüssel (Dongles etc.) zur Nutzung der Software, umfassen.

Zum Transport zur Sendeeinheit, zur Empfangseinheit und/oder zum Übertragungssystem und/oder zur Speicherung an oder in der Sendeeinheit, der Empfangseinheit und/oder dem Übertragungssystem kann ein computerlesbares Medium, beispielsweise ein Memory Stick, eine Festplatte oder ein sonstiger transportabler oder fest eingebauter Datenträger dienen, auf welchem die auf der Logikanordnung der Sendeeinheit, der Empfangseinheit und/oder des Übertragungssystems programmierbaren und ausführbaren Programmabschnitte des Computerprogramms gespeichert sind. Die Logikanordnung kann z. B. hierzu einen oder mehrere zusammenarbeitende logische Elemente oder dergleichen aufweisen.

Weitere, besonders vorteilhafte Ausgestaltungen und Weiterbildungen der Erfindung ergeben sich aus den abhängigen Ansprüchen sowie der nachfolgenden Beschreibung.

Ein Sendungspaket wird bevorzugt in einem kurzen Zeitabschnitt, nachdem es erzeugt wurde in den Datenstrom eingefügt und versendet. Dass ein Sendungspaket in einem kurzen Zeitabschnitt nach seiner Erzeugung in den Datenstrom eingefügt wird, bedeutet bevorzugt, dass es wenige Takte bzw. Clocks nach seiner Erzeugung und einem gegebenenfalls vorausgehenden Unterbrechungsmuster eingefügt wird. Besonders bevorzugt wird es höchstens vier Takte nach seiner Erzeugung eingefügt, noch weiter bevorzugt höchstens zwei Takte nach seiner Erzeugung und am stärksten bevorzugt höchstens einen Takt nach seiner Erzeugung. Der Takt kann beispielsweise 60 MHz betragen, wie er typischerweise von einem ULPI-PHY-Baustein ausgegeben wird, oder der Takt richtet sich nach Anforderungen von Bauteilen, die typischerweise im USB3 Standard genutzt werden. Bevorzugt wird jedoch der Takt verwendet, den auch der Serializer-Deserializer bzw. die Ausgangsschnittstelle zur Ausgabe bzw. zum Empfang des Datenstroms nutzt, also beispielsweise 156 MHz.

Ein Sendungspaket umfasst vorzugsweise auch Sendungssteuerdaten, die Informationen darüber enthalten, wo, dass an welcher folgenden Position bzw. in welchem Zeitintervall, ein weiteres Sendungspaket übertragen wird. Insbesondere kann also das initiale Sendungspaket, das durch das Unterbrechungsmuster gekennzeichnet ist, mittels der Sendungssteuerdaten angeben, wo bzw. wann weitere Sendungspakete folgen. Selbstverständlich kann auch jedes weitere Sendungspaket entsprechende Sendungssteuerdaten enthalten. Besonders bevorzugt ist jedoch ein Intervall vordefiniert, das den Abstand zwischen den folgenden Sendungspaketen angibt. Dieses Intervall ist vorzugsweise in Bezug zum Takt des Datenstroms definiert. Dementsprechend muss mittels der Sendungssteuerdaten nur angegeben werden, dass in dem vordefinierten Intervall ein weiteres Sendungspaket übertragen wird. Dadurch kann das für die entsprechenden Sendungssteuerdaten benötigte Datenvolumen bzw. die Bit-Anzahl vorteilhaft klein gehalten werden.

Unter Verwendung der zuvor beschriebenen Nutzung der Sendungssteuerdaten können nach dem initialen Sendungspaket die weiteren Sendungspakete anhand ihrer Position, Zeit bzw. ihres Intervalls identifiziert und von den übrigen Streaming-Daten unterschieden werden. Das Unterbrechungsmuster ist zur Unterscheidung somit nicht mehr notwendig. Um Datenvolumen zu sparen, weisen die weiteren Sendungspakete bevorzugt kein Unterbrechungsmuster mehr auf.

Bevorzugt weist jedes Sendungspaket Sendungssteuerungsdaten auf. Dadurch wird bevorzugt mit jedem Sendungspaket angegeben, ob das nächste Sendungspaket anhand seiner Position, Zeit und/oder seines Intervalls oder auf Basis eines Unterbrechungsmusters identifiziert wird.

Wie bereits erwähnt, beginnen die Schritte des Aufteilens, des Einfügens und des Versendens bereits, sobald eine zweite Anzahl von Bits an USB-Daten empfangen wurde. Dadurch können die USB-Daten vorteilhafterweise auch dann schon verarbeitet und versendet werden, wenn noch kein ganzes USB-Paket empfangen wurde. Das Aufteilen und Einfügen erfolgt bevorzugt pro vier empfangenen Bytes, besonders bevorzugt pro empfangenen Byte und ganz besonders bevorzugt pro zwei empfangenen Bytes. Durch diese kleinteilige Aufteilung können im Datenstrom vorteilhafterweise auch die übrigen Streaming-Daten ohne größere Verzögerung versendet werden.

Das Unterbrechungsmuster wird bevorzugt so gewählt, dass es in den übrigen Streaming-Daten möglichst selten auftritt. Hierzu kann beispielsweise ein Bit-Muster aus der Praxiserfahrung gewählt werden. Das heißt, über einen längeren Zeitraum werden Bit-Muster analysiert bzw. gezählt und dann das Muster als Unterbrechungsmuster ausgewählt, welches am seltensten auftritt. Besonders bevorzugt kann auf diese Art auch eine Anzahl von vordefinierten Unterbrechungsmustern bestimmt werden, die selten auftreten, und aus dieser Anzahl wird im Betrieb dasjenige Muster ausgewählt, welches in einem aktuellen definierten Zeitintervall am seltensten aufgetreten ist.

Durch eine derartige Wahl des Unterbrechungsmusters wird sichergestellt, dass das Unterbrechungsmuster möglichst wenig mit den übrigen Streaming-Daten kollidiert.

Bevorzugt umfasst das Unterbrechungsmuster zwei identische Teilmuster, die besonders bevorzugt, wie zuvor beschrieben, ausgewählt werden. Tritt nun der Fall ein, dass in den Streaming-Daten dieses zweiteilige Unterbrechungsmuster auftaucht, wird bevorzugt ein drittes identisches Teilmuster an die Streaming-Daten angehängt. Beim Empfang der Daten kann nun so sortiert werden, dass nur Daten den USB-Daten zugeordnet werden, die genau zwei identische Teilunterbrechungsmuster aufweisen. Tritt nur ein Teilunterbrechungsmuster auf, wird es den übrigen Streaming-Daten zugeordnet. Treten jedoch drei Teilunterbrechungsmuster in Folge auf, wird wieder ein Teilunterbrechungsmuster entfernt und die zwei Teilunterbrechungsmuster werden den Streaming-Daten zugeordnet.

Die Sendungssteuerdaten umfassen bevorzugt auch Informationen darüber, welches Unterbrechungsmuster momentan verwendet wird. Entsprechend kann ein Sendungspaket für das nächste Sendungspaket festlegen, dass ein anderes Unterbrechungsmuster verwendet wird. Die Sendungssteuerdaten können ferner vorzugsweise auch Informationen darüber enthalten, ob das Sendungspaket den Anfang, die Mitte oder das Ende eines USB-Pakets beinhaltet. Des Weiteren können die Sendungssteuerdaten Informationen darüber enthalten, ob direkt an das Sendungspaket folgend ein weiteres Sendungspaket angehängt wird. Außerdem können die Sendungssteuerdaten Informationen darüber enthalten, wie groß das Sendungspaket ist, d. h. wie viele Bytes an Daten es umfasst, z. B. ein Byte an Daten, zwei Bytes an Daten oder vier Bytes an Sendungsnutzdaten. Alternativ kann auch festgelegt werden, dass das Sendungspaket lediglich USB-Steuerdaten umfasst.

Bevorzugt umfasst ein Sendungspaket Sendungsprüfdaten, mit denen Übertragungsfehler festgestellt und optional korrigiert werden können. Dies kann beispielsweise mittels CRC-Daten (Cyclic Redundancy Check) erfolgen, wodurch mittels einer Prüfsumme bekannter Weise zufällige Übertragungsfehler detektiert werden und ggf. auch korrigiert werden können.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
FIG 1 ein schematisches Blockdiagramm eines Ausführungsbeispiels eines erfindungsgemäßen Übertragungssystems,
FIG 2 ein schematisches Blockdiagramm eines Ausführungsbeispiels einer kombinierten erfindungsgemäßen Sende- und Empfangseinheit,
FIG 3 ein schematisches Ausführungsbeispiel einer Datenstruktur eines Sendungspakets,
FIG 4 ein schematisches Ausführungsbeispiel einer Datenstruktur eines Sendungspakets, das USB-Steuerdaten umfasst,
FIG 5 ein schematisches Blockdiagramm eines Ausführungsbeispiels einer Schnittstelle zwischen einer kombinierten erfindungsgemäßen Sende- und Empfangseinheit und einem ULPI-PHY-Baustein,
FIG 6 ein schematisches Blockdiagramm eines Ausführungsbeispiels einer erfindungsgemäßen Sendeeinheit,
FIG 7 ein schematisches Blockdiagramm eines Ausführungsbeispiels einer erfindungsgemäßen Empfangseinheit und
FIG 8 ein Flussdiagramm eines Ausführungsbeispiels eines erfindungsgemäßen Übertragungsverfahrens.

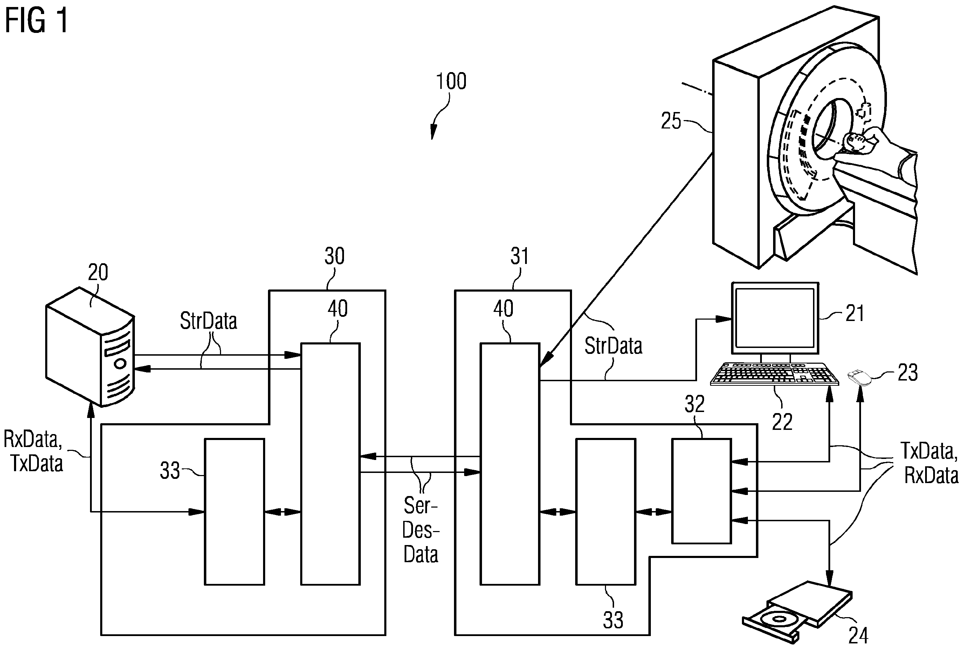

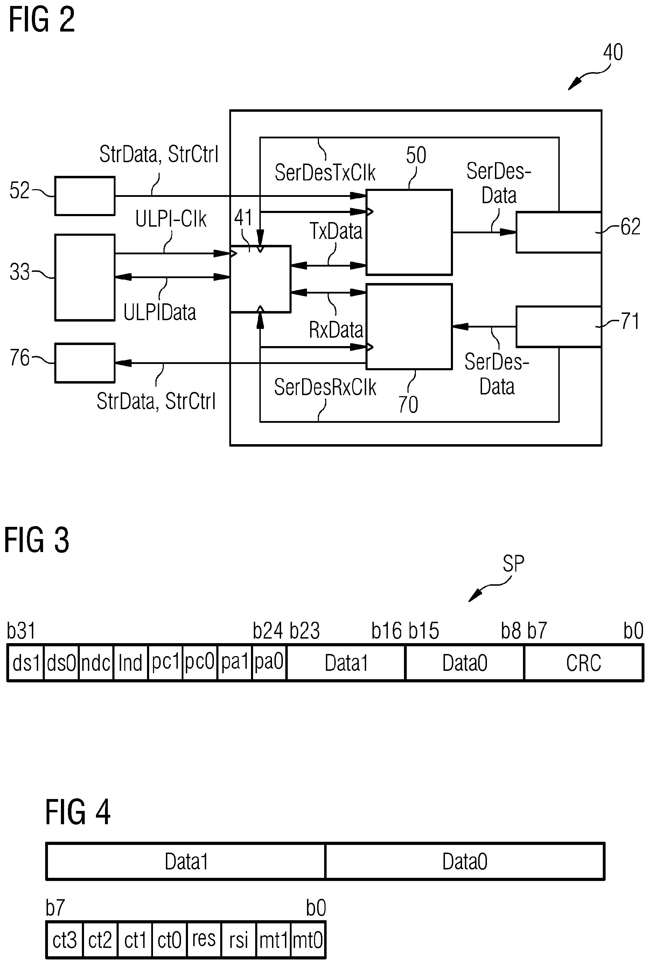

In FIG 1 ist beispielhaft und schematisch ein erfindungsgemäßes Übertragungssystem 100 als Blockdiagramm dargestellt. Das Übertragungssystem 100 umfasst eine Host-Vorrichtung 30 und eine Client-Vorrichtung 31, die im Wesentlichen ähnlich ausgestaltet sind. Sie sind bidirektional mittels einer Leitung verbunden sind, die die Übertragung von gemultiplexten Daten SerDesData ermöglicht. Die Verbindung kann beispielsweise als optische oder elektrische Verbindung ausgeführt sein. Die Host-Vorrichtung 30 und die Client-Vorrichtung 31 sind ähnlich ausgebildet und umfassen beide einen handelsüblichen UL-PI-PHY-Baustein 33 sowie ein Ausführungsbeispiel einer kombinierten erfindungsgemäßen Sende- und Empfangseinheit 40, welcher anhand von FIG 2 detaillierter erläutert wird.

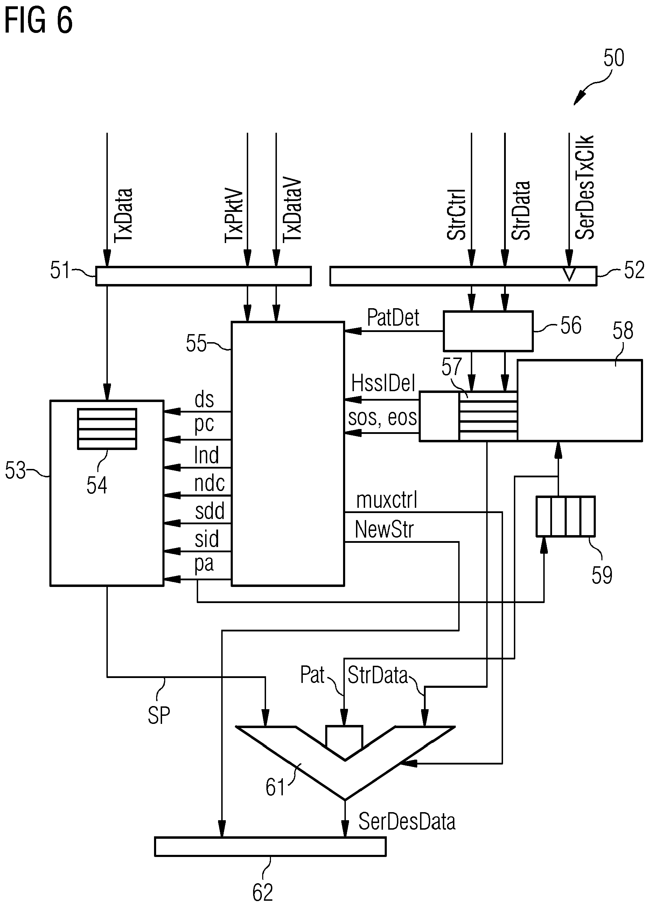

Die Sende- und Empfangseinheit 40 der Host-Vorrichtung 30 ist über den ULPI-PHY-Baustein 33 mit einer Recheneinheit 20 als Host, insbesondere als USB-Host, zum Austausch von USB-Daten RxData, TxData verbunden. Ferner weist die Recheneinheit 20 je nach Bedarf und Auslegung eine oder mehrere Verbindungen zur Sende- und Empfangseinheit 40 der Host-Vorrichtung 30 auf, die zur Übertragung, d. h. zur Versendung oder zum Empfang von Streaming-Daten StrData eingerichtet sind, z. B. eine HSSL-Verbindung. Die Streaming-Daten StrData umfassen z. B. Audiodaten, Videodaten, Messdaten von medizintechnischen Geräten und/oder dergleichen sowie ggf. zugehörige Streaming-Steuerdaten StrCtrl (siehe FIG 2 und FIG 6), jedoch keine USB-Daten.

Die Sende- und Empfangseinheit 40 der Client-Vorrichtung 31 ist anders als die Host-Vorrichtung 30 über den ULPI-PHY-Baustein 33 als USB-Schnittstelle zunächst mit einem USB-Hub 32 zum Austausch von USB-Daten RxData, TxData verbunden. An den USB-Hub 32 sind diverse USB-Endgeräte 22, 23, 24, z. B. eine Tastatur 22, eine Maus 23, ein DVD-Laufwerk 24, Massenspeichermedien (hier nicht dargestellt) und/oder dergleichen angeschlossen. Die Sende- und Empfangseinheit 40 der Client-Vorrichtung 31 ist außerdem zum Empfang von Streaming-Daten StrData in Form von Messdaten mit einem CT-Gerät 25 als medizintechnischen Gerät sowie zum Versenden von Streaming-Daten StrData in Form von Videodaten mit einem Bildschirm 21 als optischem Ausgabemittel verbunden.

Über die Verbindung zwischen der Host-Vorrichtung 30 und der Client-Vorrichtung 31 werden je Verbindungsrichtung im Datenstrom SerDesData sowohl die USB-Daten RxData, TxData als auch die Streaming-Daten StrData übertragen, wie im Folgenden detaillierter beschrieben ist.

FIG 2 zeigt beispielhaft und schematisch ein Blockdiagramm einer kombinierten erfindungsgemäßen Sende- und Empfangseinheit 40, welche eine Sendeeinheit 50 und eine Empfangseinheit 70 umfasst. Die Sendeeinheit 50 versendet über eine Ausgangsschnittstelle 62 einen erfindungsgemäß zusammengesetzten Datenstrom SerDesData, wohingegen die Empfangseinheit 70 über eine Eingangsschnittstelle 71 einen erfindungsgemäß zusammengesetzten Datenstrom SerDesData empfängt.

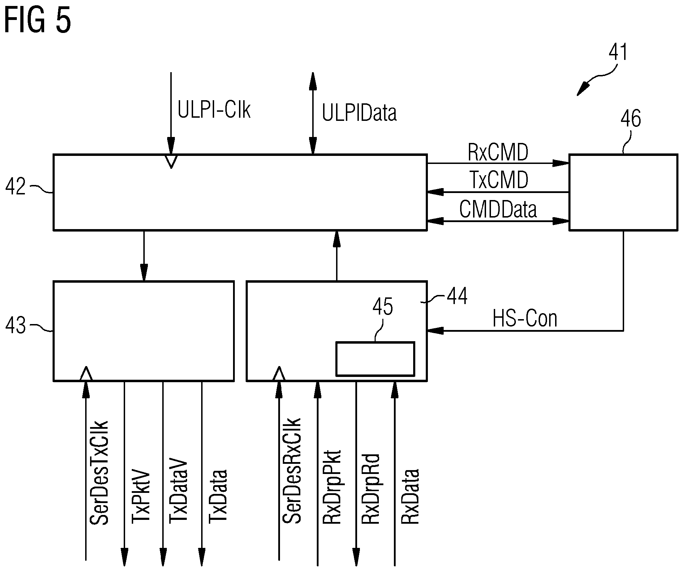

Die Sende- und Empfangseinheit 40 weist zudem eine USB-Schnittstelle 41 auf, die bidirektional mit dem ULPI-PHY-Baustein 33 verbunden ist und damit ULPI-Daten ULPIData nach dem ULPI-Standard austauscht. Zudem sendet der ULPI-PHY-Baustein 33 sein ULPI-Clocksignal ULPI-Clk an die USB-Schnittstelle 41. Die USB-Schnittstelle 41 ist zum Austausch von ausgehenden USB-Daten TxData mit der Sendeeinheit 50 und zum Austausch von eingehenden USB-Daten RxData mit der Empfangseinheit 70 verbunden. Zudem empfängt sie die ausgehende Clock SerDesTxClk von der Ausgangsschnittstelle 62 und die eingehende Clock SerDesRxClk von der Eingangsschnittstelle 71 und synchronisiert die beiden Clocks bzw. Takte SerDesTxClk, SerDesRxClk miteinander sowie mit dem ULPI-Clocksignal ULPI-Clk. Die USB-Schnittstelle 41 wird noch detaillierter anhand von FIG 5 beschrieben.

Die Sendeeinheit 50 ist mit einer Streaming-Eingangsschnittstelle 52 verbunden, von der sie Streaming-Daten StrData empfängt, welche hier auch Streaming-Steuerdaten StrCtrl umfassen. Die Sendeeinheit 50 kombiniert die ausgehenden USB-Daten TxData mit den Streaming-Daten StrData und versendet sie als zusammengesetzten Datenstrom SerDesData, in dem die USB-Daten TxData Bit-transparent übertragen werden. Die Sendeeinheit 50 und die in ihr ablaufenden Prozesse sind detaillierter in FIG 6 beschrieben.

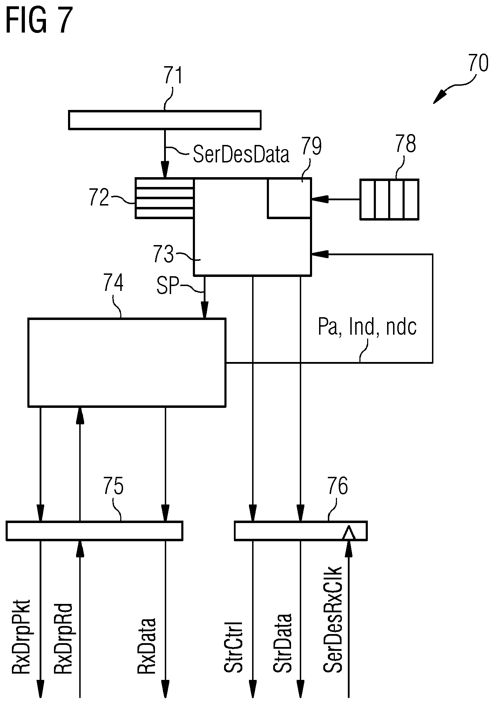

Die Empfangseinheit 70 teilt den zusammengesetzten Datenstrom SerDesData in eingehende USB-Daten RxData und Streaming-Daten StrData auf, welche auch Streaming-Steuerdaten StrCtrl umfassen. Sie überträgt die eingehenden USB-Daten RxData an die USB-Schnittstelle 41 und die Streaming-Daten StrData an eine Streaming-Ausgangsschnittstelle 76. Die Empfangseinheit 70 und die in ihr ablaufenden Prozesse sind detaillierter in FIG 7 beschrieben.

FIG 5 zeigt beispielhaft und schematisch ein Blockdiagramm einer USB-Schnittstelle 41 einer erfindungsgemäßen Sende- und Empfangseinheit 40. Die USB-Schnittstelle 41 umfasst eine UL-PI-Schnittstelle 42, die mit dem ULPI-PHY-Baustein 33 verbunden ist, eine USB-Ausgangsschnittstelle 43, die mit der ULPI-Schnittstelle 42 und der Sendeeinheit 50 verbunden ist, und eine USB-Eingangsschnittstelle 45, die mit der ULPI-Schnittstelle 42 und der Empfangseinheit 70 verbunden ist.

Wie bereits beschrieben, erfolgt die Verbindung und Übertragung von ULPI-Daten ULPIData und ULPI-Clocksignal ULPI-Clk zwischen der ULPI-Schnittstelle 42 dem ULPI-PHY-Baustein 33 nach dem ULPI-Standard.

Die USB-Ausgangsschnittstelle 43 synchronisiert die USB-Schnittstelle 41 mit dem Signal der ausgehenden Clock SerDesTxClk. Sie empfängt von der ULPI-Schnittstelle 42 die ausgehenden USB-Daten TxData und überträgt sie an die Sendeeinheit 50. Zudem überträgt die USB-Ausgangsschnittstelle 43 ein ausgehendes Paketvalidierungssignal TxPktV als Steigung, während ein USB-Paket übertragen wird, und ein Datenvalidierungssignal TxDataV, währen ein Byte von USB-Daten aus der ULPI-Schnittstelle 42 ausgelesen wird.

Die USB-Eingangsschnittstelle 44 synchronisiert die USB-Schnittstelle 41 mit dem Signal der eingehenden Clock SerDesRxClk. Sie ist zudem mit der Empfangseinheit 70 verbunden und empfängt von dort eingehende USB-Daten RxData sowie ein zugehöriges eingehendes Paketvalidierungssignal RxDrpPkt als Steigung, während ein USB-Paket übertragen wird. Die USB-Eingangsschnittstelle 44 sendet eine Leseanforderung RxDrpRd, um USB-Pakete zu abzurufen, sofern sie an der Empfangseinheit 70 verfügbar sind.

Eine USB-Steuereinheit 46 der USB-Schnittstelle 41 empfängt über die ULPI-Schnittstelle 42 eingehende USB-Steuerdaten RxCMD, wie z. B. eine Veränderung des USB-Status, von dem UL-PI-PHY-Baustein 33 im etablierten ULPI-Format und wandelt sie zu USB-Steuerdaten CMDData in eine für die Sendungspakete SP geeignete Form.

Mittels ausgehender USB-Steuerdaten TxCMD, welche aus den USB-Steuerdaten CMDData der eingehenden Sendungspakete SP übersetzt werden, übermittelt die USB-Steuereinheit 46 der USB-Schnittstelle 41 über die ULPI-Schnittstelle 42 an den ULPI-PHY-Baustein 33 im etablierten ULPI-Format Befehl, wie z. B. die Anforderung zusätzlicher Information oder eine Änderung der Konfiguration des ULPI-PHY-Bausteins 33, wie beispielsweise eine Änderung der Übertragungsgeschwindigkeit von Full-Speed (FS) auf High-Speed (HS).

Entsprechend der Konfiguration des ULPI-PHY-Bausteins 33 zeigt die USB-Steuereinheit 46 auch der USB-Eingangsschnittstelle 44 mittels des Geschwindigkeitssignals HS-Con die Übertragungsgeschwindigkeit an, sodass die USB-Daten über die ULPI-Schnittstelle 42 entsprechend ausgegeben werden können.

Die USB-Eingangsschnittstelle 44 umfasst in dieser Ausgestaltungsform einen Zwischenspeicher 45 in dem die Sendungspakete in Abhängigkeit von der Übertragungsgeschwindigkeit zu USB-Pakten zusammengesetzt und ausgegeben werden können. Dieser Teil der USB-Schnittstelle 41 ist somit funktional der Empfangseinheit 70 zuzuordnen. Alternativ können die USB-Pakete auch direkt in der Empfangseinheit 70 rekonstruiert bzw. zusammengesetzt werden, wie anhand von FIG 7 noch beschrieben wird.

In FIG 6 ist beispielhaft und schematisch ein Blockdiagramm einer erfindungsgemäßen Sendeeinheit 50 dargestellt. Die Sendeeinheit 50 umfasst eine USB-Eingangsschnittstelle 51 zum Empfang der ausgehenden USB-Daten TxData. Die ausgehenden USB-Daten TxData werden, wie anhand von FIG 5 beschrieben, von der USB-Schnittstelle 41 übertragen, empfangen, an eine Verteilungseinheit 53 weitergeleitet und dort in einem Zwischenspeicher 54 bis zur Aufteilung auf eine Anzahl von Sendungspaketen SP gespeichert. Die ausgehenden USB-Daten TxData liegen zunächst in Form von USB-Paketen vor, die eine ersten Anzahl von Bits umfassen. Sie werden in der Verteilungseinheit 53 in Sendungspakete SP bzw. Droplets mit einer zweiten Anzahl von Bits, z. B. zwei Byte, an USB-Daten TxData aufgeteilt.

Die Sendungspakete SP umfassen des weiteren Sendungssteuerdaten ds, pc, lnd, ndc, sdd, sid, pa, welche von einer Sendesteuereinheit 55 empfangen und den USB-Daten TxData nachgestellt angeordnet werden. Zur Überprüfung der korrekten Übermittlung eines Sendungspakets SP wird diesem eine Prüfsumme bzw. ein Cyclic Redundancy Check CRC vorangestellt angeordnet. Die Anordnung der Bits in einem Sendungspaket erfolgt nach einem vordefinierten Schema. Wie das Schema im Detail ausgestaltet ist, kann je nach den spezifischen Anforderungen festgelegt werden. Die so zusammengestellten Sendungspakete SP werden an eine Kombinationseinheit 61 übermittelt, welche den ausgehenden Datenstrom SerDesData zusammensetzt.

FIG 3 zeigt ein schematisches Beispiel für ein solches Sendungspaket SP. Das erste Byte b0, b1, ..., b7 ist für den Cyclic Redundancy Check CRC vorgesehen, der basierend auf den übrigen Bits bekanntermaßen gebildet wird. Das zweite und dritte Byte b8, b9, ..., b15, b16, b17, ..., b23 sind regulär für die Nutzdaten, d. h. die USB-Daten data0, datal bzw. USB-Steuerdaten mt0, mt1, rsi, res, ct0, ct1, ct2, ct3 (siehe FIG 4) vorgesehen. Das vierte Byte b24, b25, ..., b31 enthält die Sendungssteuerdaten pa0, pa1, pc0, pc1, lnd, ndc, ds0, ds1.

Die Sendungssteuerdaten pa0, pa1, pc0, pc1, lnd, ndc, ds0, ds1 sind im Folgenden einzeln erläutert. Die Bits pa0, pa1 signalisieren, welches Unterbrechungsmuster Pat aktiv ist. D. h. es wird damit eines von vier vordefinierten Unterbrechungsmustern Pat ausgewählt, das das nächste Sendungspaket SP kennzeichnet. Die Bits pc0, pc1 enthalten USB-Paket-Kontrolldaten. D. h. sie geben vier USB-Paketzustände an, nämlich "start of packet" (SOP), also den Beginn eines USB-Pakets, "end of paket" (EOP), also das Ende eines USB-Pakets, "body of paket", also den Körper bzw. Mittelteil eines USB-Pakets, oder mittels "command", dass USB-Steuerdaten mt0, mt1, rsi, res, ct0, ct1, ct2, ct3 im Sendungspaket SP übermittelt werden. Mittels des Bits lnd wird signalisiert, ob direkt, also ohne Unterbrechungsmuster Pat, auf das Sendungspaket SP bzw. Droplet ein weiteres Sendungspaket folgt. Im anderen Fall signalisiert es, dass Streaming-Daten StrData folgen. Das Bit ndc signalisiert, ob ein weiteres Sendungspaket SP in einem vordefinierten Intervall und vorzugsweise ohne zusätzliches Unterbrechungsmuster Pat folgt. Im anderen Fall signalisiert es, dass das nächste Sendungspakte SP durch ein Unterbrechungsmuster Pat gekennzeichnet ist. Die Bits ds0, ds1 geben die Größe des aktuellen Sendungspakets an, also ob es keines, eines oder zwei Datenbytes Data0, Data1 enthält. Das kein Datenbyte enthalten ist, kann dabei aber auch bedeuten, dass lediglich USB-Steuerdaten mt0, mt1, rsi, res, ct0, ct1, ct2, ct3 im Sendungspaket SP enthalten sind.

In FIG 4 ist ein schematisches Beispiel für die Übertragung von USB-Steuerdaten mt0, mt1, rsi, res, ct0, ct1, ct2, ct3 im Datenbyte datal eines Sendungspakets SP dargestellt. Die Übertragung von USB-Steuerdaten mt0, mt1, rsi, res, ct0, ct1, ct2, ct3 wird mittels der Sendungssteuerdaten pc0, pc1 sowie ds0, ds1 signalisiert. Die USB-Steuerdaten mt0, mt1, rsi, res, ct0, ct1, ct2, ct3 sind im Folgenden einzeln erläutert. Die mt0, mt1 geben den Nachrichtentyp an. Damit wird signalisiert, ob es sich um reine Information handelt, die keine Antwort erfordert, ob eine Antwort angefordert wird, oder, ob es sich um eine angeforderte Antwort handelt. Das Bit rsi signalisiert, ob es sich um eine zum ersten Mal oder um eine wiederholt gesendete Nachricht handelt. Das Bit res bleibt für weitere Implementierungen frei und wird auf 0 gesetzt. Mittels der Bits ct0, ct1, ct2, ct3 werden unterschiedliche im ULPI definierte Steuervorgänge signalisiert, nämlich z. B. "Idle", "Client Connect", "Controller reset", "Client chirp started", "Controller start of frame timeout", "Controller suspend", "Controller SE0", "Controller resume start". Die weiteren grundsätzlich auch für USB-Steuerdaten verfügbaren Bits das Bytes data0 des Sendungspakts SP sind für weitere Implementierungen reserviert.

Die Sendesteuereinheit 55 weist die Verteilungseinheit 53 bevorzugt an jeweils 2 Bytes an USB-Daten TxData auf die Sendungspakete SP zu verteilen. Sollte jedoch die Zeit zwischen zwei ausgehenden Paketvalidierungssignalen TxPktV zu lang sein, kann auch ein Sendungspaket SP mit nur einem Byte an USB-Daten TxData generiert werden.

Die Sendeeinheit 50 in FIG 6 weist ferner eine Streaming-Eingangsschnittstelle 52 zum Empfang der Streaming-Daten StrData auf. Sie ist z. B. als HSSL-Schnittstelle oder dergleichen ausgestaltet. Neben den eigentlichen Streaming-Daten StrData werden über die Streaming-Eingangsschnittstelle 52 auch Streaming-Steuerdaten StrCtrl empfangen, welche z. B. einen Stream-Anfang sos oder ein Stream-Ende eos signalisieren. Zudem wird mittels der Streaming-Eingangsschnittstelle 52 die ausgehende Clock SerDesTxClk empfangen, die von der Ausgangsschnittstelle 62 bereitgestellt wird. Diese kann alternativ, z. B. auch mittels eines Taktgebers, in der Sendeeinheit 50 erzeugt werden. Alle in der Sendeeinheit 50 ablaufenden Prozesse, wie z. B. auch die Verteilung der USB-Daten TxData auf Sendungspakete SP in der Verteilungseinheit 52, werden bevorzugt mit der ausgehenden Clock SerDesTxClk ausgeführt bzw. sind damit getaktet.

Die Streaming-Daten StrData werden an eine Mustererkennungseinheit 56 übermittelt. Die Mustererkennungseinheit 56 signalisiert der Sendesteuereinheit 55 mittels eines Mustererfasst-Signals PatDet das Auftreten eines Unterbrechungsmusters Pat bzw. eines Teilmusters.

Die Streaming-Daten StrData werden folgend in einem Puffer 57 zwischengespeichert. Dieser umfasst bevorzugt vier oder mehr Doppelwörter an Streaming-Daten StrData, um einen Abbruch des Streams rechtzeitig genug feststellen zu können, um die weitere Übermittlung der zeitkritischen ausgehenden USB-Daten TxData sicherstellen zu können. Mit dem Puffer 57 ist ein Musteranalysator 58 verbunden. Der Musteranalysator 58 zählt jeweils das Auftreten einer Anzahl von, bevorzugt vier verschiedenen, vordefinierten Unterbrechungsmusstern Pat bzw. deren Teilmustern in den Streaming-Daten StrData. Die Unterbrechungsmusstern Pat bzw. deren zwei identische Teilmuster sind in einem Musterspeicher 59 hinterlegt und können daraus abgerufen und darin, z. B. bei einem Update oder durch einen Musterwahlvorgang, aktualisiert werden. Durch die Wahl des am seltensten auftretenden Unterbrechungsmusters Pat wird vorteilhafterweise Bandbreite eingespart, da weniger zusätzliche Teilmuster zur Kennzeichnung der Streaming-Daten StrData eingefügt werden müssen. Der Musteranalysator 58 zeigt der Sendesteuereinheit 55 das entsprechende Unterbrechungsmuster Pat an und die Sendesteuereinheit 55 versendet die entsprechende Information in den Steuerdaten pa0, pa1 des nächsten Sendungspakets SP.

Der Musteranalysator 58 ist hier in die Sendeeinheit 50 integriert. Er kann alternativ aber auch als separate Einheit ausgestaltet sein, die mittels entsprechender Schnittstellen mit der Sendeeinheit 50 verbunden ist.

Eine zentrale Aufgabe der Sendesteuereinheit 55 ist es, die Kombination des ausgehenden zusammengesetzten Datenstroms SerDesData, der mittels einer Ausgangsschnittstelle 62 versendet wird, zu steuern. Dazu sendet sie ein Kombinationssteuersignal muxctrl an eine Kombinationseinheit 61. Bevorzugt stellt sie sicher, das USB-Daten TxData innerhalb eines Taktes der ausgehenden Clock SerDesTxClk als Sendungspaket in den ausgehenden kombinierten Datenstrom SerDes eingefügt werden oder gegebenenfalls zumindest das vorausgehende Unterbrechungsmuster SP innerhalb eines Taktes der ausgehenden Clock SerDesTxClk in den ausgehenden kombinierten Datenstrom SerDes eingefügt wird. Dazu generiert sie in Abhängigkeit von den im Zwischenspeicher 54 angelaufenen USB-Daten TxData Sendungssteuerdaten pa0, pa1, pc0, pc1, lnd, ndc, ds0, ds1 für die einzufügenden Sendungspakete SP. Insbesondere wird dabei mittels der Steuerdaten lnd, ndc festgelegt, wann das nächste Sendungspaket SP folgt, also ob es direkt folgt, in einem vordefinierten Intervall oder ob es, z. B. als initiales Sendungspaket SP, durch ein Unterbrechungsmuster Pat signalisiert wird. Wenn ein Sendungspakt SP durch ein Unterbrechungsmuster Pat signalisiert wird, weist die Sendesteuereinheit 55 die Kombinationseinheit 61 an, zunächst das aktuell verwendete Unterbrechungsmuster Pat aus dem Musterspeicher 59 einzufügen und dann das Sendungspaket SP.

Falls in den Streaming-Daten StrData das aktuelle Unterbrechungsmuster Pat mit zwei identischen Teilmustern auftritt, weist die Sendesteuereinheit 55 die Kombinationseinheit 61 an, diesem ein weiteres identisches Teilmuster anzufügen. Dadurch kann eine Logik in der Empfangseinheit 70 (siehe FIG 7) die Daten als Streaming-Daten StrData interpretieren, wenn drei aufeinanderfolgende oder nur ein Teilmuster auftritt. Nur wenn das Unterbrechungsmuster Pat mit genau zwei identischen aufeinanderfolgenden Teilmustern auftritt, werden die folgenden Daten als Sendungspaket interpretiert.

Sofern es nicht erforderlich ist Sendungspakete SP über den kombinierten Datenstrom SerDesData zu versenden, werden die Streaming-Daten StrData - ggf. mit wie beschrieben eingefügten zusätzlichen Teilmustern - verschickt. Falls kein Stream geöffnet ist, also keine Streaming-Daten StrData versendet werden, aber Sendungspakete SP verschickt werden müssen, kann die die Sendesteuereinheit 55 die Ausgangsschnittstelle 62 mittels eines Stream-öffnen-Signals NewStr direkt anweisen, einen neuen Datenstrom SerDesData zu öffnen. Dieser kann dann gegebenenfalls und solange wie erforderlich mittels sogenannten "Idle-Paketen", also Sendungspaketen SP, die keine weiter relevanten Daten enthalten, aufrechterhalten werden.

In FIG 7 zeigt beispielhaft und schematisch ein Blockdiagramm einer erfindungsgemäßen Empfangseinheit 70. Sie dient zum Empfang von eingehenden USB-Daten RxData in Form von Sendungspaketen SP in einem Datenstrom SerDesData, der wie oben beschrieben versendet wurde und Streaming-Daten StrData umfasst. Dazu weist die Empfangseinheit 70 eine Eingangsschnittstelle 71 auf, die mit der Ausgangsschnittstelle 61 der Sendeeinheit 50 aus FIG 6 verbunden ist.

Die Eingangsschnittstelle 71 überträgt die Daten in einen Zwischenspeicher 72 einer Teilungseinheit 73, welche den Datenstrom SerDesData in Sendungspakete SP und Streaming-Daten StrData aufteilt. Die Teilungseinheit 73 umfasst wiederum eine Identifikationseinheit 79, welche im zusammengesetzten Datenstrom SerDesData vorkommende aktive Unterbrechungsmuster Pat bzw. deren identischen Teilmuster identifiziert, indem sie mit vordefinierten Mustern aus einem Musterspeicher 78 verglichen werden. Falls ein aktives Unterbrechungsmuster Pat mit genau zwei aufeinanderfolgende identische Teilmuster identifiziert wird, wobei die direkt folgenden Daten ungleich dem Teilmuster sind, werden die Daten als Sendungspaket SP identifiziert und an eine Rekonstruktionseinheit 74 weitergeleitet. Ein auf solche Weise identifiziertes Unterbrechungsmusters Pat hebt die vorherige Planung mittels der Sendungssteuerdaten ndc für in einem Intervall folgende Sendungspakete SP auf. Gibt jedoch an vorhergehendes Sendungspaket SP an, dass weitere Sendungspakete SP mittels der Sendungssteuerdaten ndc, ldc als direkt oder in einem Intervall folgend geplant sind, werden die eintreffenden Daten entsprechend als Sendungspakete SP interpretiert und ebenfalls an die eine Rekonstruktionseinheit 74 weitergeleitet.

Falls die vorgenannten Bedingungen nicht vorliegen, also nicht genau zwei identische Teilmuster ein Unterbrechungsmuster bilden und die Daten nicht als direkt oder in einem Intervall folgendes Sendungspaket SP interpretiert werden, werden die Daten als Streaming-Daten StrData interpretiert. Bei drei aufeinanderfolgenden identische Teilmustern wird das beim Versenden zusätzlich hinzugefügte Teilmuster entfernt, um die ursprünglichen Streaming-Daten StrData wiederherzustellen. Die Streaming-Daten StrData werden dann an eine Streaming-Ausgangsschnittstelle 76 zur Ausgabe weitergeleitet, welche mit der eingehenden Clock SerDesRxClk synchronisiert ist. Auch hier umfassen die Streaming-Daten StrData, wie bereits beschrieben, zugehörige Streaming-Steuerdaten StrCtrl.

Die Rekonstruktionseinheit 74 überprüft das Sendungspaket SP zunächst entsprechend dem Cyclic Redundancy Check CRC auf seine Prüfsumme. Sendungspakete SP mit inkorrekten Prüfsummen CRC werden verworfen. Falls dadurch USB-Daten RxData nicht oder nicht vollständig eintreffen, wird dies durch die im USB-Standard definierten Maßnahmen, wie z. B. eine erneute Anforderung der betroffenen USB-Daten aufgefangen.

Des Weiteren werden die Sendungssteuerdaten pa0, pa1, pc0, pc1, lnd, ndc, ds0, ds1 ausgewertet. Die in den Sendungssteuerdaten pa0, pa1, lnd, ndc enthaltenen Informationen werden für die Interpretation der nachfolgend eintreffenden Daten des Datenstroms SerDesData an die Teilungseinheit 73 übermittelt. Die Sendungssteuerdaten pc0, pc1, ds0, ds1 betreffen, wie oben bereits beschrieben, die im aktuellen Sendungspaket SP enthaltenen Daten data0, datal und das aktuelle Sendungspaket wird dementsprechend zu eingehenden USB-Daten RxData in Form von USB-Paketen rekonstruiert. Im Regelfall erfolgt die Übertragung und Rekonstruktion fehlerfrei, sodass die eingehenden USB-Daten RxData identisch mit den zuvor versendeten ausgehenden USB-Daten TxData sind. Die Übertragung erfolgt somit bit-transparent. Die derart rekonstruierten eingehenden USB-Daten RxData werden mit den zugehörigen Steuerdaten RxDrpRd, RxDrpPkt, wie bereits anhand von FIG 5 beschrieben, über eine USB-Ausgangsschnittstelle 75 an eine verbundene USB-Schnittstelle 41 bzw. den ULPI-PHY-Baustein 33 übertagen, wobei es mit dem ULPI-Clocksignal ULPI-Clk des ULPI-PHY-Bausteins 33 synchronisiert wird (hier nicht gezeigt).

Alternativ kann die Rekonstruktion der eingehenden USB-Daten RxData analog zur obigen Beschreibung in der USB-Schnittstelle 41 erfolgen. Die entsprechenden Komponenten der USB-Schnittstelle 41 sind dann funktionell der Empfangseinheit 70 zuzuordnen.

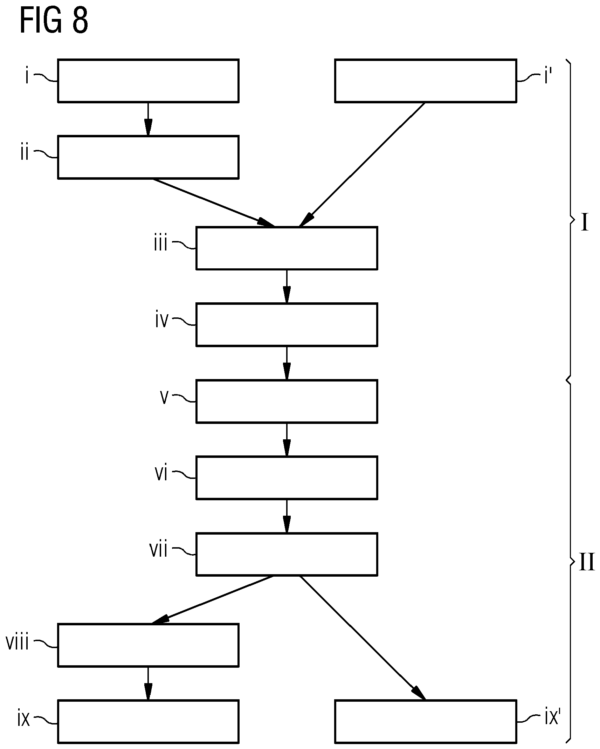

FIG 8 zeigt beispielhaft und schematisch ein Flussdiagramm eines erfindungsgemäßen Verfahrens zur Übertragung von Daten, welche ein Verfahren zur Versendung von Daten I und ein Verfahren zum Empfang von Daten II umfasst. Das Verfahren zur Versendung von Daten I ist hier in die Schritte i, i', ii, iii, iv untergliedert und wird insbesondere in einer Sendeeinheit 50 ausgeführt, wie sie anhand von FIG 6 beschrieben wurde.

In einem Schritt i werden, wie oben anhand der Sendeeinheit 50 beschrieben, ausgehende USB-Daten TxData, die eine Anzahl von USB-Paketen mit einer ersten Anzahl von Bits umfassen mittels einer USB-Eingangsschnittstelle 51 empfangen. Zudem werden in einem Schritt i` Streaming-Daten StrData mittels einer Streaming-Eingangsschnittstelle 52 empfangen.

In einem weiteren Schritt ii werden die ausgehenden USB-Daten TxData mittels einer eine Verteilungseinheit 53 aufgeteilt und dadurch eine Anzahl von Sendungspaketen SP mit einer zweiten Anzahl von Bits an USB-Daten erzeugt.

Die Sendungspakete SP werden in einem Schritt iii eine Kombinationseinheit 61 in einen Datenstrom SerDesData eingefügt, wobei zumindest ein initiales Sendungspaket SP mit einem Unterbrechungsmuster Pat, gekennzeichnet ist. Das Unterbrechungsmuster Pat wird also insbesondere in Form von zwei identischen Teilmustern und bevorzugt direkt vor dem Sendungspaket SP in den Datenstrom SerDesData eingefügt. Dadurch, dass im Datenstrom SerDesData zudem die Streaming-Daten StrData übertragen werden, entsteht somit ein kombiniert bzw. zusammengesetzter Datenstrom SerDesData.

Der zusammengesetzte Datenstrom SerDesData wird in einem Schritt iv mittels einer Ausgangsschnittstelle 62 versendet.

Das Verfahren zum Empfang von Daten II ist hier in die Schritte v, vi, vii, viii, ix, ix' untergliedert und wird insbesondere in einer Empfangseinheit 70 ausgeführt, wie sie anhand von FIG 7 beschrieben wurde.

In einem Schritt v wird der, wie in Schritt iv beschrieben versendete, zusammengesetzte Datenstrom SerDesData mittels einer Eingangsschnittstelle 71 der Empfangseinheit 70 empfangen. Der zusammengesetzte Datenstrom SerDesData umfasst somit Sendungspakete SP und Streaming-Daten StrData. Dabei weist zumindest ein initiales Sendungspaket SP ein Unterbrechungsmuster Pat auf. Damit signalisiert es, dass USB-Daten RxData im folgenden Datenstrom SerDesData vorhanden sind,
In einem weiteren Schritt vi wird zumindest ein Unterbrechungsmuster Pat in dem zusammengesetztem Datenstrom SerDesData mittels einer Identifikationseinheit 79 identifiziert.

Das Unterbrechungsmuster Pat kennzeichnet das direkt folgende Sendungspaket SP, sodass in einem folgenden Schritt vii eine Teilungseinheit 73 den Datenstrom SerDesData unter Verwendung des Unterbrechungsmusters Pat in Sendungspakete SP und Streaming-Daten StrData aufteilt.

In einem Schritt viii werden die in den Sendungspaketen SP enthaltenen eingehenden USB-Daten RxData mittels einer Rekonstruktionseinheit 74 zu USB-Datenpakten rekonstruiert.

Die zu Paketen rekonstruierten eingehenden USB-Daten RxData werden in einem Schritt ix mittels einer USB-Ausgangsschnittstelle 75 ausgegeben.

Die separierten Streaming-Daten StrData werden in einem Schritt ix' mittels einer Streaming-Ausgangsschnittstelle 76 ausgegeben.

Es wird abschließend noch einmal darauf hingewiesen, dass es sich bei den vorhergehend detailliert beschriebenen Vorrichtungen und Verfahren lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können. So kann beispielsweise, wie oben bereits beschrieben die Rekonstruktionseinheit 74 der Empfangseinheit 70 auch in der USB-Schnittstelle 41 ausgebildet sein, die dann zugleich als USB-Ausgangsschnittstelle aus der Empfangseinheit dient, wobei die Sendungspakete SP in diesem Fall erst in der USB-Schnittstelle 41 zu den auszugebenden USB-Paketen rekonstruiert werden. In einem anderen Fall kann es vorteilhaft sein, Hin- und Rückweg, also einen eingehenden und einen ausgehenden Datenstrom SerDesData, in einer kombinierten Sende- und Empfangseinheit 40 zusammen zu verarbeiten, sodass einige Komponenten ggf. auch gemeinsam genutzt werden können.

## Patentansprüche

1. Verfahren zur Versendung (I) von USB-Daten (TxData) in einem Datenstrom (SerDesData), der Streaming-Daten umfassend Video- und/oder Audiodaten (StrData) umfasst, aufweisend folgende Schritte:
- Empfang (i,i`) der Streaming-Daten (StrData) und zumindest eines Teils der USB-Daten (TxData), die eine Anzahl von USB-Paketen mit einer ersten Anzahl von Bits umfassen,
- Aufteilen (ii) der USB-Daten (TxData) zum Erzeugen einer Anzahl von Sendungspaketen (SP) mit einer zweiten Anzahl von Bits an USB-Daten (TxData),
- Einfügen (iii) eines Sendungspakets (SP) in den Datenstrom (SerDesData), und
- Versenden (iv) des zusammengesetzten Datenstroms (SerDesData), wobei
zumindest an ein initiales Sendungspaket (SP) ein Unterbrechungsmuster (Pat) angefügt wird, um zu signalisieren, dass USB-Daten (TxData) im Datenstrom (SerDesData) vorhanden sind, wobei das Unterbrechungsmuster das wenigstens eine initiale Sendungspaket identifiziert und einem Empfänger signalisiert, dass es sich um ein Sendungspaket handelt.

2. Verfahren nach Anspruch 1, wobei ein Sendungspaket (SP) Sendungssteuerdaten (ndc) umfasst, die Information darüber enthalten, wo ein weiteres Sendungspaket (SP) übertragen wird, wobei die Information angibt, dass in einem vordefinierten Intervall ein weiteres Sendungspaket (SP) übertragen wird.

3. Verfahren nach Anspruch 2, wobei das weitere Sendungspaket (SP) kein Unterbrechungsmuster (Pat) aufweist.

4. Verfahren nach einem der vorstehenden Ansprüche, wobei jedes Sendungspaket (SP) Sendungssteuerdaten (ndc) umfasst.

5. Verfahren nach einem der vorstehenden Ansprüche, wobei die Schritte des Aufteilens und Einfügens bereits beginnen, sobald eine zweite Anzahl von Bits an USB-Daten (RxData, TxData) empfangen wurde.

6. Verfahren nach einem der vorstehenden Ansprüche, wobei das Unterbrechungsmuster (Pat), insbesondere aus einer Anzahl von vordefinierten Unterbrechungsmustern als dasjenige Bit-Muster gewählt wird, das in den übrigen Streaming-Daten (StrData) über einen längeren Zeitraum am seltensten auftritt.

7. Verfahren nach einem der vorstehenden Ansprüche, wobei ein Sendungspaket (SP) Sendungsprüfdaten (CRC) umfasst, mit denen Übertragungsfehler festgestellt und optional korrigiert werden können.

8. Verfahren nach einem der vorstehenden Ansprüche, wobei ein Sendungspaket (SP) in einem direkt folgenden Takt des Datenstroms, nachdem es erzeugt wurde, in den Datenstrom eingefügt und versendet wird.

9. Verfahren nach einem der vorstehenden Ansprüche, wobei das Unterbrechungsmuster (Pat) aus genau zwei identischen Teilmustern besteht und falls in den Streaming-Daten die zwei identischen Teilmuster auftreten, diesen zur Unterscheidung vom Unterbrechungsmuster (Pat) ein drittes identisches Teilmuster angefügt wird.

10. Verfahren zum Empfang (II) von Daten (SerDesData), die nach einem der vorstehenden Ansprüche versandt wurden, mit folgenden Schritten:
- Empfang (v) des zusammengesetzten Datenstroms (SerDesData),
- Identifizieren (vi) eines Unterbrechungsmusters (Pat),
- Aufteilen (vii) des Datenstroms (SerDesData) in Sendungspakete (SP) und Streaming-Daten (StrData) umfassend Audio- und/oder Video-Daten unter Verwendung des Unterbrechungsmusters (Pat), das wenigstens ein initiales Sendungspaket identifiziert und einem Empfänger signalisiert, dass es sich um ein Sendungspaket handelt,
- Rekonstruktion (viii) der in den Sendungspaketen (SP) enthaltenen USB-Daten (RxData) zu USB-Datenpakten und
- separate Ausgabe (ix, ix') der Streaming-Daten (StrData) und der rekonstruierten USB-Daten (RxData).

11. Verfahren zur Übertragung (I, II) von Daten umfassend die Schritte (i, i`, ii, iii, iv) zur Versendung von Daten mittels eines Verfahrens nach einem der Ansprüche 1 bis 9 sowie die Schritte (v, vi, vii, viii, ix, ix') zum Empfang von Daten mittels eines Verfahrens nach Anspruch 10.

12. Sendeeinheit (50) zur Versendung von USB-Daten (TxData) in einem Datenstrom (SerDesData), der Streaming-Daten (StrData) umfassend Audio- und/oder Videodaten umfasst, aufweisend:
- zumindest eine Streaming-Eingangsschnittstelle (52) zum Empfang der Streaming-Daten (StrData),
- eine USB-Eingangsschnittstelle (51) zum Empfang der USB-Daten (TxData), die eine Anzahl von USB-Paketen mit einer ersten Anzahl von Bits umfassen,
- eine Verteilungseinheit (53) zum Aufteilen der USB-Daten (TxData), um eine Anzahl von Sendungspaketen (SP) mit einer zweiten Anzahl von Bits an USB-Daten (TxData) zu erzeugen,
- eine Kombinationseinheit (61) zum Einfügen eines Sendungspakets (SP) in den Datenstrom (SerDesData) und
- eine Ausgangsschnittstelle (62) zum Versenden des zusammengesetzten Datenstroms (SerDesData), wobei
zumindest an ein initiales Sendungspaket ein (SP) Unterbrechungsmuster (Pat) angefügt ist, um zu signalisieren, dass USB-Daten (TxData) im Datenstrom (SerDesData) vorhanden sind, wobei das Unterbrechungsmuster das wenigstens eine initiale Sendungspaket identifiziert und einem Empfänger signalisiert, dass es sich um ein Sendungspaket handelt.

13. Empfangseinheit (70) zum Empfang von USB-Daten (RxData) in einem Datenstrom (SerDesData), der Streaming-Daten (StrData) umfassend Audio- und/oder Videodaten umfasst, aufweisend:
- eine Eingangsschnittstelle (71) zum Empfang eines zusammengesetzten Datenstroms (SerDesData), der Sendungspakete (SP) und Streaming-Daten (StrData) umfasst, wobei zumindest ein initiales Sendungspaket (SP) ein Unterbrechungsmuster (Pat) aufweist, um zu signalisieren, dass USB-Daten (RxData) im folgenden Datenstrom (SerDesData) vorhanden sind, wobei das Unterbrechungsmuster das wenigstens eine initiale Sendungspaket identifiziert und der Empfangseinheit signalisiert, dass es sich um ein Sendungspaket handelt,
- eine Identifikationseinheit (79) zum Identifizieren eines Unterbrechungsmusters (Pat),
- eine Teilungseinheit (73) zum Aufteilen des Datenstroms (SerDesData) in Sendungspakete (SP) und Streaming-Daten (StrData) unter Verwendung des Unterbrechungsmusters (Pat),
- eine Rekonstruktionseinheit (74) zur Rekonstruktion der in den Sendungspaketen (SP) enthaltenen USB-Daten (RxData) zu USB-Datenpakten,
- zumindest eine Streaming-Ausgangsschnittstelle (76) zur Ausgabe der Streaming-Daten (StrData),
- eine USB-Ausgangsschnittstelle (75) zur Ausgabe der USB-Daten (RxData).

14. Übertragungssystem (100) zur Übertragung von USB-Daten (TxData, RxData) in zumindest einem Datenstrom (SerDesData), der Streaming-Daten (StrData) umfasst, aufweisend:
- eine Client-Vorrichtung (31) mit einer Sendeeinheit (50) nach Anspruch 12 und einer Empfangseinheit (70) nach Anspruch 13 und
- eine Host-Vorrichtung (30) mit einer Sendeeinheit (50) nach Anspruch 12 und einer Empfangseinheit (70) nach Anspruch 13, wobei
die Sendeeinheit (50) der Client-Vorrichtung (31) mit der Empfangseinheit (70) der Host-Vorrichtung (30) und die Sendeeinheit (50) der Host-Vorrichtung (30) mit der Empfangseinheit (70) der Client-Vorrichtung (31) verbunden ist.

15. Computerprogrammprodukt mit einem Computerprogramm, welches direkt in eine Logikanordnung einer Sendeeinheit (50) und/oder einer Empfangseinheit (70) ladbar ist, mit Programmabschnitten, um zumindest einen Teil der Schritte des Verfahrens nach einem der Ansprüche 1 bis 9 und/oder 10 oder 11 auszuführen, wenn das Computerprogramm in der Sendeeinheit (50) und/oder in einer Empfangseinheit (70) ausgeführt wird.

16. Computerlesbares Medium, auf welchem auf eine Logikanordnung programmierbare und ausführbare Programmabschnitte gespeichert sind, um zumindest einen Teil der Schritte des Verfahrens nach einem der Ansprüche 1 bis 9 und/oder 10 oder 11 auszuführen, wenn die Programmabschnitte von der Logikanordnung ausgeführt werden.

## Claims

1. Method for transfer (I) of USB data (TxData) in a data stream (SerDesData), which comprises streaming data comprising video and/or audio data (StrData), having the following steps:
- Receipt (i,i') of the streaming data (StrData) and at least one part of the USB data (TxData), which comprises a number of USB packets with a first number of bits,
- Division (ii) of the USB data (TxData) for creation of a number of transfer packets (SP) with a second number of bits of USB data (TxData),
- Insertion (iii) of a transfer packet (SP) into the data stream (SerDesData), and
- Transfer (iv) of the assembled data stream (SerDesData), wherein
an interruption pattern (Pat) is added at least to an initial transfer packet (SP) in order to signal that USB data (TxData) is present in the data stream (SerDesData), wherein the interruption pattern identifies the at least one initial transfer packet and signals to a receiver that a transfer packet is involved.

2. Method according to claim 1, wherein a transfer packet (SP) comprises transfer control data (ndc), which contains information about where a further transfer packet (SP) will be transmitted, wherein the information specifies that a further transfer packet (SP) will be transmitted in a predefined interval.

3. Method according to claim 2, wherein the further transfer packet (SP) does not have an interruption pattern (Pat).

4. Method according to one of the preceding claims, wherein each transfer packet (SP) comprises transfer control data (ndc) .

5. Method according to one of the preceding claims, wherein the steps of dividing up and inserting already begin as soon as a second number of bits of USB data (RxData, TxData) have been received.

6. Method according to one of the preceding claims, wherein the interruption pattern (Pat) is selected, in particular from a number of predefined interruption patterns, as the bit pattern that occurs most rarely over a longer period of time in the rest of the streaming data (StrData).

7. Method according to one of the preceding claims, wherein a transfer packet (SP) comprises cyclic redundancy check (CRC) data, with which transmission errors can be established and optionally corrected.

8. Method according to one of the preceding claims, wherein a transfer packet (SP) is inserted into the data stream and transferred in a directly following clock of the data stream after it has been created.

9. Method according to one of the preceding claims, wherein the interruption pattern (Pat) consists of precisely two identical subpatterns and if the two identical subpatterns occur in the streaming data, a third identical subpattern is added to these for distinguishing the interruption pattern (Pat) .

10. Method for receiving (II) data (SerDesData), which has been transferred according to in one of the preceding claims, with the following steps:
- Receipt (v) of the assembled data stream (SerDesData),
- Identification (vi) of an interruption pattern (Pat),
- Division (vii) of the data stream (SerDesData) into transfer packets (SP) and streaming data (StrData) comprising audio and/or video data using the interruption pattern (Pat), which identifies the at least one initial transfer packet and signals to a receiver that a transfer packet is involved,
- Reconstruction (viii) of the USB data (RxData) contained in the transfer packets (SP) to USB data packets and
- Separate output (ix, ix') of the streaming data (StrData) and the reconstructed USB data (RxData).

11. Method for transmission (I, II) of data comprising the steps (i, i`, ii, iii, iv) for transfer of data by means of a method according to one of claims 1 to 9 and also the steps (v, vi, vii, viii, ix, ix') for receiving data by means of a method according to claim 10.

12. Send unit (50) for transfer of USB data (TxData) in a data stream (SerDesData), which comprises streaming data (StrData) comprising audio and/or video data, having:
- At least one streaming input interface (52) for receiving the streaming data (StrData),
- A USB input interface (51) for receiving the USB data (TxData), which comprises a number of USB packets with a first number of bits,
- A distribution unit (53) for dividing up the USB data (TxData) in order to create a number of transfer packets (SP) with a second number of bits of USB data (TxData),
- A combination unit (61) for insertion of a transfer packet (SP) into the data stream (SerDesData) and
- An output interface (62) for sending the assembled data stream (SerDesData), wherein
An interruption pattern (Pat) is added to at least one initial transfer packet (SP) in order to signal that USB data (TxData) is present in the data stream (SerDesData), wherein the interruption pattern identifies the at least one initial transfer packet and signals to a receiver that a transfer packet is involved.

13. Receive unit (70) for receiving USB data (RxData) in a data stream (SerDesData), which comprises streaming data (StrData) comprising audio and/or video data, having:
- An input interface (71) for receiving an assembled data stream (SerDesData), which comprises transfer packets (SP) and streaming data (StrData), wherein at least one initial transfer packet (SP) has an interruption pattern (Pat) in order to signal that USB data (RxData) is present in the following data stream (SerDesData), wherein the interruption pattern identifies the at least one initial transfer packet and signals to the receive unit that a transfer packet is involved,
- An identification unit (79) for identification of an interruption pattern (Pat),
- A division unit (73) for dividing the data stream (SerDesData) into transfer packets (SP) and streaming data (StrData) using the interruption pattern (Pat),
- A reconstruction unit (74) for reconstruction of the USB data (RxData) contained in the transfer packets (SP) to USB data packets,
- At least one streaming output interface (76) for output of the streaming data (StrData),
- A USB output interface (75) for output of the USB data (RxData).

14. Transmission system (100) for transmission of USB data (TxData, RxData) in at least one data stream (SerDesData), which comprises streaming data (StrData), having:
- A client apparatus (31) with a send unit (50) according to claim 12 and a receive unit (70) according to claim 13 and
- A host apparatus (30) with a send unit (50) according to claim 12 and a receive unit (70) according to claim 13, wherein
the send unit (50) of the client apparatus (31) is connected to the receive unit (70) of the host apparatus (30) and the send unit (50) of the host apparatus (30) is connected to the receive unit (70) of the client apparatus (31).

15. Computer program product with a computer program, which is able to be loaded directly into a logic arrangement of a send unit (50) and/or a receive unit (70), with program sections for carrying out at least a part of the steps of the method according to one of claims 1 to 9 and/or 10 or 11, when the computer program is executed in the send unit (50) and/or in a receive unit (70).

16. Computer-readable medium, on which program sections able to be programmed and executed on a logic arrangement are stored for carrying out at least a part of the steps of the method according to one of claims 1 to 9 and/or 10 or 11 when the program sections are executed by the logic arrangement.

## Revendications

1. Procédé d'envoi (I) de données USB (TxData) en un flux (SerDesData) de données, qui comprend des données de streaming (StrData), comprenant des données audio et/ou vidéo, comportant les stades suivants :
- réception (i, i') des données de streaming (StrData) et d'au moins une partie des données USB (TxData), qui comprennent un certain nombre de paquets USB ayant un premier nombre de bits,
- subdivision (ii) des données USB (TxData) pour la production d'un certain nombre de paquets (SP) d'envoi ayant un deuxième nombre de bits de données USB (TxData),
- insertion (iii) d'un paquet (SP) d'envoi dans le flux (SerDesData) de données, et
- envoi (iv) du flux (SerDesData) de données composé, dans lequel
on joint un motif (Pat) d'interruption au moins à un paquet (SP) d'envoi initial pour signaler que des données USB (TxData) sont présentes dans le flux (SerDesData) de données, dans lequel le motif d'interruption identifie le au moins un paquet d'envoi initial et signale au récepteur qu'il s'agit d'un paquet d'envoi.

2. Procédé suivant la revendication 1, dans lequel un paquet (SP) d'envoi comprend des données (ndc) de commande d'envoi, qui contiennent de l'information sur l'endroit où un autre paquet (SP) d'envoi est transmis, dans lequel l'information indique que dans un intervalle défini à l'avance, on transmet un autre paquet (SP) d'envoi.

3. Procédé suivant la revendication 2, dans lequel l'autre paquet (SP) d'envoi n'a pas de motif (Pat) d'interruption.

4. Procédé suivant l'une des revendications précédentes, dans lequel chaque paquet (SP) d'envoi comprend des données (ndc) de commande d'envoi.

5. Procédé suivant l'une des revendications précédentes, dans lequel les stades de la subdivision et de l'insertion commencent dès qu'un nombre de bits de données USB (RxData, TxData) a été reçu.

6. Procédé suivant l'une des revendications précédentes, dans lequel on choisit le motif (Pat) d'interruption, en particulier parmi un nombre de motifs d'interruption défini à l'avance comme le motif de bit, qui apparaît le plus rarement sur un assez long espace de temps dans les autres données (StrData) de streaming.

7. Procédé suivant l'une des revendications précédentes, dans lequel un paquet (SP) d'envoi comprend des données (CRC) de contrôle d'envoi, par lesquelles on peut déterminer une erreur de transmission et éventuellement la corriger.

8. Procédé suivant l'une des revendications précédentes, dans lequel on insère dans le flux de données et on envoie un paquet (SP) d'envoi en une cadence immédiatement suivante du flux de données après qu'elle a été produite.

9. Procédé suivant l'une des revendications précédentes, dans lequel le motif (Pat) d'interruption est constitué d'exactement deux motifs partiels identiques et, s'il se produit dans les données de streaming les deux motifs partiels identiques, on annexe à ceux-ci, pour se différencier du motif (Pat) d'interruption, un troisième motif partiel identique.

10. Procédé de réception (II) de données (SerDesData), qui ont été envoyées suivant l'une des revendications précédentes, comprenant les stades suivants :
- réception (v) du flux (SerDesData) de données composé,
- identification (vi) d'un motif (Pat) d'interruption,
- subdivision (vii) du flux (SerDesData) de données en des paquets (SP) d'envoi et des données de streaming (StrData), comprenant des données audio et/ou vidéo, en utilisant le motif (Pat) d'interruption, qui identifie au moins un paquet d'envoi initial et signale à un récepteur qu'il s'agit d'un paquet d'envoi,
- reconstruction (viii) des données USB (RxData) contenues dans les paquets USB d'envoi en des paquets de données USB et
- édition (ix, ix') séparée des données de streaming (StrData) et des données USB (RxData) reconstruites.

11. Procédé de transmission (I, II) de données, comprenant les stades (i, i', ii, iii, iv) d'envoi de données au moyen d'un procédé suivant l'une des revendications 1 à 9, ainsi que les stades (v, vi, vii, viii, ix, ix') de réception de données au moyen d'un procédé suivant la revendication 10.

12. Unité (50) d'envoi pour l'envoi de données USB (TxData) en un flux (SerDesData) de données, qui comprend des données de streaming (StrData), comprenant des données audio et/ou vidéo, comportant :
- au moins une interface (52) d'entrée de streaming pour la réception des données (StrData) de streaming,
- une interface (51) d'entrée USB pour la réception des données USB (TxData), qui comprennent un certain nombre de paquets USB ayant un premier nombre de bits,
- une unité (53) de subdivision pour la subdivision des données USB (TxData), afin de produire un nombre de paquets (SP) USB d'envoi ayant un deuxième nombre de bits de données USB (TxData),
- une unité (61) de combinaison pour l'insertion d'un paquet (SP) d'envoi au flux (SerDesData) de données et
- une interface (62) de sortie pour l'envoi du flux (SerDesData) de données composé, dans lequel
au moins un (SP) motif (Pat) d'interruption est annexé à un paquet d'envoi initial, afin de signaler que des données USB (TxData) sont présentes dans le flux (SerDesData) de données, dans lequel le motif d'interruption identifie le au moins un paquet d'envoi initial et signale au récepteur qu'il s'agit d'un paquet d'envoi.

13. Unité (70) de réception pour la réception de données USB (RxData) en un flux (SerDesData) de données, qui comprend des données de streaming (StrData), comprenant des données audio et/ou vidéo, comportant :
- une interface (71) d'entrée pour la réception d'un flux (SerDesData) de données composé, qui comprend des paquets (SP) d'envoi et des données de streaming (StrData), dans lequel au moins un paquet (SP) d'envoi initial a un motif (Pat) d'interruption, afin de signaler que des données (RxData) USB sont présentes dans le flux (SerDesData) de données suivant, dans lequel le motif d'interruption identifie le au moins un paquet d'envoi initial et signale à l'unité de réception, qu'il s'agit d'un paquet d'envoi,
- une unité (79) d'identification pour identifier un motif (Pat) d'interruption,
- une unité (73) de subdivision pour subdiviser le flux (SerDesData) de données en des paquets (SP) d'envoi et en des données de streaming (StrData), en utilisant le motif (Pat) d'interruption,
- une unité (74) de reconstruction pour la reconstruction des données USB (RxData) contenues dans les paquets (SP) d'envoi en des paquets de données USB,
- au moins une interface (76) de sortie de streaming pour l'édition des données de streaming (StrData),
- une interface (75) de sortie USB pour l'édition des données USB (RxData).

14. Système (100) de transmission pour la transmission de données USB (TxData, RxData) en au moins un flux (SerDesData) de données, qui comprend des données de streaming (StrData), comportant :
- un dispositif (31) client ayant une unité (50) d'émission suivant la revendication 12 et une unité (70) de réception suivant la revendication 13 et
- un dispositif (30) hôte ayant une unité (50) d'émission suivant la revendication 12 et une unité (70) de réception suivant la revendication 13, dans lequel
l'unité (50) d'émission du dispositif (31) client est reliée à l'unité (70) de réception du dispositif (30) hôte et l'unité (50) d'émission du dispositif (30) hôte est reliée au dispositif (70) de réception du dispositif (31) client.

15. Produit de programme d'ordinateur comprenant un programme d'ordinateur, qui peut être chargé directement dans un agencement logique d'une unité (50) d'émission et/ou d'une unité (70) de réception, comportant des parties de programme pour exécuter au moins une partie des stades du procédé suivant l'une des revendications 1 à 9 et/ou 10 ou 11, lorsque le programme d'ordinateur est exécuté dans l'unité (50) d'émission et/ou dans l'unité (70) de réception.

16. Support déchiffrable par ordinateur, sur lequel sont mises en mémoire des parties de programme pouvant être programmées réalisées sur un agencement logique, afin d'exécuter au moins une partie des stades du procédé suivant l'une des revendications 1 à 9 et/ou 10 ou 11, lorsque les parties de programme sont exécutées par l'agencement logique.
